# EUROPEAN PATENT APPLICATION

(11) **EP 2 348 203 A1**
(43) Date of publication of application: **27.07.2011**
(21) Application number: 08878119.0
(22) Date of filing: 13.11.2008
(51) Int. Cl.: F01N 3/20, F01N 3/08, F02D 41/04

(54) **EXHAUST PURIFICATION DEVICE FOR INTERNAL COMBUSTION ENGINE**

(71) Applicant: Toyota Jidosha Kabushiki Kaisha, Toyota-shi, Aichi 471-8571 (JP)
(72) Inventor: KATOH, Kenji, Toyota-shi Aichi 471-8571 (JP); MASUDA, Kei, Toyota-shi Aichi 471-8571 (JP)
(74) Representative: Kuhnen & Wacker
(86) International application number: PCT/JP2008/070708
(87) International publication number: WO 2010/055573

(57) **Abstract**

An object of this invention is to prevent components such as NOx and H2S being emitted when starting a vehicle and improve exhaust emissions by utilizing information of a navigation system. A navigation system 52 mounted in the vehicle is connected to an ECU 50. The ECU 50 predicts whether a stopping time of the internal combustion engine 10 is near based on the current position and travel history of the vehicle obtained from the navigation system 52. When a stopping time is near, the ECU 50 executes rich spike control prior to the stopping time to thereby perform a regeneration process of the NOx catalyst 26. Thus, NOx components or sulfur components remaining in the catalyst 26 can be eliminated before stopping the internal combustion engine 10. Accordingly, even if warming up is performed when the engine is next started, emission of NOx or hydrogen sulfide can be avoided.

## Description

### Technical Field

The present invention relates to an exhaust emission purifier of an internal combustion engine that includes a NOx storage/reduction catalyst, and more particularly to an exhaust emission purifier of an internal combustion engine that is configured to utilize a navigation system or the like.

### Background Art

In the conventional art, an exhaust emission purifier of an internal combustion engine is known that utilizes information of a navigation system, for example, as disclosed in Patent Document 1 (Japanese Patent Laid-Open No. 2005-105949). The exhaust emission purifier of the conventional art includes a NOx storage/reduction catalyst, and a reduction process for NOx stored in the catalyst is executed by supplying fuel (a reducing agent) to the catalyst as required.

Further, according to the conventional art, a configuration is known that stops the supply of a reducing agent when it is predicted that a stopping time of the internal combustion engine is near. In this case, the stopping time of the internal combustion engine is predicted on the basis of current position information or the like of the vehicle that is acquired by the navigation system. Thus, according to the conventional art, a configuration is adopted in which a state is entered in which a superfluous amount of a reducing agent remains in a catalyst or the like when the internal combustion engine stops, and emission of the reducing agent to outside at the next engine start-up is prevented.

Patent Document 1: Japanese Patent Laid-Open No. 2005-105949
Patent Document 2: Japanese Patent Laid-Open No. 2000-240431

### Disclosure of the Invention

### Problems to be Solved by the Invention

According to the conventional art described above, a configuration is adopted that prevents emission of a reducing agent for a catalyst when starting an internal combustion engine. However, in many cases NOx components in exhaust gas remain in a stored state in a NOx storage/reduction catalyst even after the internal combustion engine stops. Further, since sulfur components in fuel are liable to adhere to a catalyst, there are cases in which sulfur components also remain in a catalyst. There is thus the problem that the next time the internal combustion engine starts, the aforementioned residual components form NOx or H2S and are emitted, and thus the exhaust emissions worsen.

The present invention was made to solve the above described problem, and an object of the invention is to provide an exhaust emission purifier of an internal combustion engine that is capable of preventing components such as NOx or H2S being emitted when starting an internal combustion engine and thus improve exhaust emissions by utilizing information of a navigation system.

### Means for Solving the Problem

A first aspect of the present invention is an exhaust emission purifier of an internal combustion engine, comprising:
a NOx catalyst that is provided in an exhaust passage of an internal combustion engine that is mounted in a vehicle, and that stores and reduces NOx components in exhaust gas;
information acquiring means that acquires information including a current position and a travel history of the vehicle as travel information; and
catalyst regeneration control means that, when it is predicted that a stopping time of the internal combustion engine is near based on the travel information, makes an exhaust air-fuel ratio of the internal combustion engine richer than at a time of normal operation.

In a second aspect of the present invention, the catalyst regeneration control means predicts whether or not a stopping time of the internal combustion engine is near by comparing a current position of the vehicle that is obtained as the travel information and a destination that is registered in the information acquiring means.

In a third aspect of the present invention, the catalyst regeneration control means predicts whether or not the internal combustion engine will be stopped for a period that is long enough to require a warming up operation based on the travel history of the vehicle that is obtained as the travel information, and when the catalyst regeneration control means predicts that the stop time will be long, the catalyst regeneration control means enriches the exhaust air-fuel ratio prior to stopping.

In a fourth aspect of the present invention, the exhaust emission purifier of an internal combustion engine further comprising:
NOx storage amount acquiring means that acquires an amount of NOx components stored in the NOx catalyst;
wherein when a storage amount of the NOx components is greater than or equal to a NOx reference determination value, the catalyst regeneration control means enriches the exhaust air-fuel ratio in order to perform a reduction process for the NOx components.

In a fifth aspect of the present invention, the exhaust emission purifier of an internal combustion engine further comprising:
sulfur adherence amount acquiring means that acquires an amount of sulfur components adhered to the NOx catalyst;
wherein when an adherence amount of the sulfur components is greater than or equal to a sulfur reference determination value, the catalyst regeneration control means enriches the exhaust air-fuel ratio in order to perform a desorption process for the sulfur components.

In-a sixth aspect of the present invention, when performing the desorption process for the sulfur components, the catalyst regeneration control means enriches the exhaust air-fuel ratio over a longer time period than a time period required for a reduction process for NOx components stored in the NOx catalyst.

In a seventh aspect of the present invention, the catalyst regeneration control means adjusts an execution state of the desorption process based on road traffic information or a time of travel that are obtained as the travel information.

In an eighth aspect of the present invention, the catalyst regeneration control means estimates a temperature of the internal combustion engine at a time of a next start-up based on at least one item of information among items of information relating to a current position of the vehicle and a current date that are obtained as the travel information and an outside air temperature, and previously adjusts an amount of NOx components that remain in the NOx catalyst when the internal combustion engine stops in accordance with the estimated temperature.

### Advantages of the Invention

According to the first invention, catalyst regeneration control means can predict that a stopping time of an internal combustion engine is near based on travel information obtained from information acquiring means. It is therefore possible to execute control that enriches the exhaust air-fuel ratio (rich spike control or the like) before stopping the internal combustion engine, and to stop the internal combustion engine thereafter. Consequently, NOx components or sulfur components remaining in the NOx catalyst can be removed before stopping the internal combustion engine. Therefore, even if warming up is performed the next time the engine starts, emission of NOx or hydrogen sulfide can be avoided, and exhaust emissions can be reduced when performing a warming up operation after starting the engine.

According to the second invention, there is a high probability that the internal combustion engine will be stopped when the vehicle arrives at the destination. Therefore, the catalyst regeneration control means, for example, can predict that a stopping time of the internal combustion engine is near when a distance or a time from the current position of the vehicle to the destination is less than or equal to a given level, that is, when the vehicle has arrived close to the destination.

According to the third invention, in a case where the internal combustion engine will be stopped for a long time, this fact can be predicted, utilizing past travel history. Accordingly, in such a case, the internal combustion engine can be stopped after the exhaust air-fuel ratio has been enriched, and thus NOx components and sulfur components that remain in the catalyst can be removed before stopping the engine. Further, even when a parking place of the vehicle is unrelated to a destination registered in the information acquiring means, the exhaust air-fuel ratio can be enriched at an appropriate timing before stopping the engine. Thus, travel information of the information acquiring means can be utilized more efficiently, and precise control can be performed. Further, when the internal combustion engine is stopped for only a short time and warming up is not required, fuel can be saved because an operation to enrich the exhaust air-fuel ratio need not be executed.

According to the fourth invention, the catalyst regeneration control means can enrich the exhaust air-fuel ratio, for example, only in a case where a NOx storage amount is large to the extent that it is necessary to perform a reduction process. Therefore, when a NOx storage amount is small, unnecessary enriching can be avoided and fuel can be saved.

According to the fifth invention, the catalyst regeneration control means can enrich the exhaust air-fuel ratio, for example, only in a case where an adhered amount of a sulfur component is large to the extent that it is necessary to perform a desorption process. Therefore, when an adhered amount of a sulfur component is small, unnecessary enriching can be avoided and fuel can be saved.

According to the sixth invention, when performing a desorption process for a sulfur component, the catalyst regeneration control means can enrich the exhaust air-fuel ratio over a longer time period than a time period required for a reduction process for a NOx component. Therefore, a desorption process for a sulfur component and a reduction process for a NOx component can be effectively performed together using only the required minimum amount of fuel.

According to the seventh invention, the catalyst regeneration control means can adjust an execution state of a desorption process based on road traffic information or a time of travel. Therefore, for example, it is possible to make it hard to execute a desorption process for a sulfur component when traveling in congested traffic. Accordingly, it is possible to take the environment surrounding the vehicle into consideration and prevent SOx or the like being emitted by execution of a desorption process irrespective of the fact that the vehicle is traveling in congested traffic in which there is a high concentration of other vehicles or people around the vehicle. Further, for example, it is possible to make it easy to execute a desorption process when traveling at night. Accordingly, a desorption process can be actively performed when traveling at night when there are few vehicles or people around the vehicle. Thus, the efficiency of the desorption process can be enhanced while taking into consideration the surrounding environment.

According to the eighth invention, the catalyst regeneration control means acquires information regarding the temperature environment around the vehicle based on at least one item of information among information relating to the current position of the vehicle, the current date, and the outside air temperature, and can estimate an engine temperature at the next engine start-up in accordance with the temperature environment. Further, by changing the execution state of rich spike control or the like based on the estimated engine temperature, the amount of NOx that remains after the engine stops can be appropriately adjusted in advance. As a result, for example, in winter or in cold districts or the like, even if warming up is performed in an extremely rich atmosphere, emission of NOx that is in a stored state can be prevented. Further, in summer or in warm districts, unnecessary enriching or the like need not be executed before stopping the engine, and the execution timing thereof can be accurately set.

### Brief Description of Drawings

[Figure 1] Figure 1 is an overall configuration diagram for describing a system configuration on an internal combustion engine side according to Embodiment 1 of the present invention.
[Figure 2] Figure 2 is a flowchart of control executed by the ECU according to Embodiment 1 of the present invention.
[Figure 3] Figure 3 is a flowchart of control executed by the ECU according to Embodiment 2 of the present invention.
[Figure 4] Figure 4 is a flowchart of control executed by the ECU according to Embodiment 3 of the present invention.
[Figure 5] Figure 5 is a flowchart of control executed by the ECU according to Embodiment 4 of the present invention.

### Description of Reference Numerals

10 internal combustion engine, 12 cylinder, 14 piston, 16 combustion chamber, 18 air intake passage, 20 exhaust passage, 22 throttle valve, 24 start catalyst, 26 NOx catalyst, 28 fuel tank, 30 fuel injection valve, 32 spark plug, 34 intake valve, 36 exhaust valve, 38 A/F sensor, 40 oxygen concentration sensor, 42 outside air temperature sensor, 50 ECU, 52 navigation system (information acquiring means)

### Best Mode for Carrying Out the Invention

### Embodiment 1

### [Configuration of Embodiment 1]

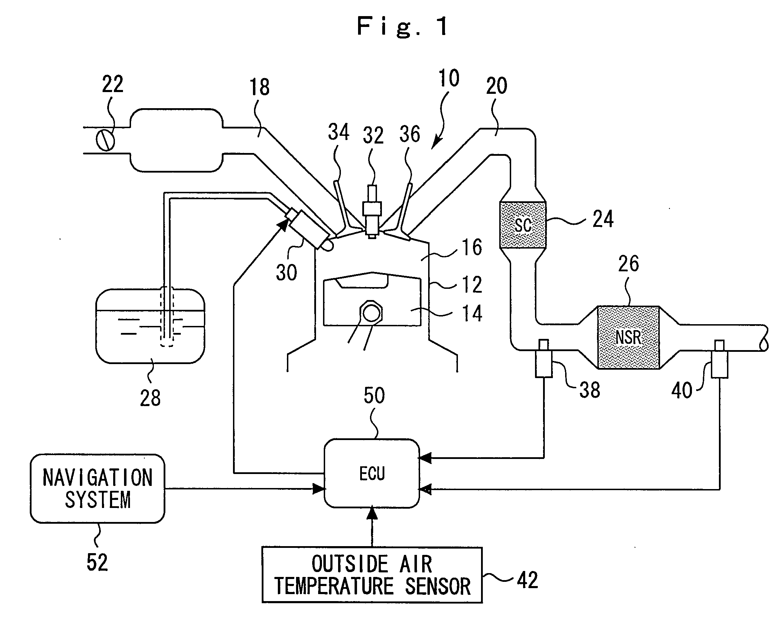

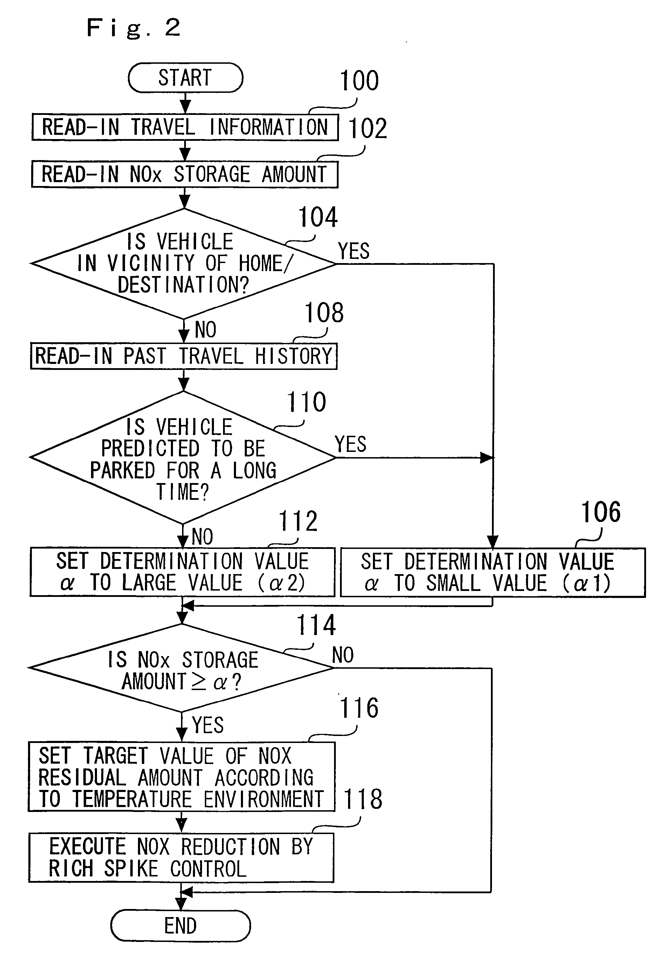

Hereunder, Embodiment 1 of the present invention is described referring to Figure 1 and Figure 2. First, Figure 1 is an overall configuration diagram for describing a system configuration on an internal combustion engine side according to Embodiment 1 of the present invention. As shown in Figure 1, the system of the present embodiment, for example, includes an internal combustion engine 10 constituted by a lean-burn engine. A piston 14 is provided in a cylinder 12 of the internal combustion engine 10. The piston 14 forms a combustion chamber 16 inside the cylinder 12 and is also connected to an unshown crank shaft.

The internal combustion engine 10 includes an air intake passage 18 that draws intake air into the combustion chamber 16, and an exhaust passage 20 that discharges exhaust gas from the combustion chamber 16. An electronic controlled throttle valve 22 that increases or decreases an intake air amount in accordance with an accelerator operation or the like by the driver is provided in the air intake passage 18. In addition, a start catalyst 24 and a NOx catalyst 26 are provided in the exhaust passage 20. In the cylinder 12 are provided a fuel injection valve 30 that injects fuel that is inside a fuel tank 28 into an intake port, a spark plug 32 that ignites an air-fuel mixture inside the combustion chamber 16, an intake valve 34 that opens and closes the air intake passage 18 with respect to the combustion chamber 16, and an exhaust valve 36 that opens and closes the exhaust passage 20 with respect to the combustion chamber 16.

The NOx catalyst 26 is constituted by a so-called NOx storage/reduction catalyst. More specifically, the NOx catalyst 26 temporarily stores NOx components included in exhaust gas and reduces and purifies the NOx components by a reduction process that is described later. The NOx catalyst 26, for example, has a catalyst component in which a precious metal such as platinum (Pt) and a NOx storage material are disposed on a surface of alumina (Al2 03). For example, at least one member selected from a group of alkali metals such as potassium (K), natrium (Na), lithium (Li) and cesium (Cs), alkaline earths such as barium (Ba) and calcium (Ca), and rare earths such as lanthanum (La) and yttrium (Y) can be used as the NOx storage material. In the present specification, it is assumed that the term "storage" includes all similar concepts such as "holding", "adsorption", and "absorption".

The system of the present embodiment also has a sensor system that includes an A/F sensor 38, an oxygen concentration sensor 40, an outside air temperature sensor 42, and the like, and a ECU (Electronic Control Unit) 50 for controlling an operational state of the internal combustion engine 10. The A/F sensor 38, for example, detects an exhaust air-fuel ratio on an upstream side of the NOx catalyst 26. The oxygen concentration sensor 40 detects whether the exhaust air-fuel ratio is rich or lean on the downstream side of the NOx catalyst 26. The outside air temperature sensor 42 detects the outside air temperature.

The aforementioned sensor system also includes a revolution sensor that detects the number of revolutions of the internal combustion engine, an airflow meter that detects an intake air amount, a water temperature sensor that detects a cooling water temperature, and an accelerator opening degree sensor that detects an accelerator opening degree. These sensors are connected to an input side of the ECU 50. Various actuators including the throttle valve 22, the fuel injection valve 30, and the spark plug 32 are connected to an output side of the ECU 50.

The ECU 50 performs operational control by driving each actuator while detecting the operational state of the internal combustion engine using the sensor system. More specifically, the ECU 50 causes fuel to be injected from the fuel injection valve 30 in accordance with an intake air amount detected by the air flow meter while opening and closing the throttle valve 22 in accordance with a degree of accelerator opening instructed by the driver or the like. Further, the ECU 50, for example, calculates the appropriate ignition timing in accordance with the number of revolutions or load conditions or the like of the internal combustion engine 10, and performs ignition using the spark plug 32 when the target ignition timing is reached.

A navigation system 52 as information acquiring means is mounted in the vehicle in which the internal combustion engine 10 is mounted. The navigation system 52 is a generally known navigation system, for example, as disclosed in Japanese Patent Laid-Open No. 2000-240431, that includes a GPS apparatus for detecting the position of the vehicle, map data which is data showing roads for travel, and a memory circuit for storing destinations and the like. More specifically, when the driver of the vehicle or the like registers a destination, the navigation system 52 determines the optimal travel route to the destination based on the map data. Further, while traveling, the navigation system 52 performs vehicle guidance so as to follow the optimal travel route while detecting the position of the vehicle. The memory circuit of the navigation system 52 also stores travel history including information such as dates and times and routes that have been travelled in the past, and information regarding destinations (for example, home, place of employment, or vacation destination) that have been registered by the driver or the like.

Thus, the navigation system 52 can acquire information such as the current position of the vehicle, the past travel history, the current date and time, information regarding traffic congestion on the travel roads, and the destination (hereunder, these various kinds of information are referred to as "travel information"). Further, according to the present embodiment, the navigation system 52 is connected to the ECU 50, and the ECU 50 can obtain travel information from the navigation system 52. The ECU 50 is configured to execute rich spike control at an appropriate timing based on the travel information while executing lean burn control during operation of the internal combustion engine. These kinds of control are described hereunder.

### (Lean burn control)

Lean burn control is executed as combustion control at a time of normal operation. For example, in an operating region that does not require a high output, the lean burn control holds the exhaust air-fuel ratio on a side that is leaner than the theoretical air-fuel ratio (stoichiometric ratio). More specifically, according to the lean burn control, the exhaust air-fuel ratio is detected by the A/F sensor 38 and the oxygen concentration sensor 40, and the fuel injection amount is controlled in accordance with the output thereof to make the exhaust air-fuel ratio lean. Consequently, according to the lean burn control, fuel consumption performance and exhaust emissions can be improved in medium speed and low speed operating regions and the like.

### (Rich spike control)

As is commonly known, rich spike control is executed to reduce NOx components stored in the NOx catalyst 26 and remove sulfur poisoning of the catalyst 26. More specifically, according to rich spike control, for example, the exhaust air-fuel ratio is made richer than at a time of normal operation (time of lean burn) by performing additional fuel injection. More specifically, the exhaust air-fuel ratio is changed to the stoichiometric ratio or further to the rich side than the stoichiometric ratio. Thus, when the NOx catalyst 26 is exposed to a rich atmosphere (reducing atmosphere), NOx components that have been stored inside the catalyst are reduced by the action of the catalyst and change to N2 or the like and thereby purified. Further, in the case of sulfur poisoning of the NOx catalyst 26 also, sulfur components adhered to the catalyst can be desorbed by exposing the NOx catalyst 26 to a rich atmosphere. Thus, a regeneration process of the NOx catalyst 26 can be performed by the rich spike control.

However, according to the conventional art, the internal combustion engine may be stopped in a state in which a relatively large quantity of NOx is stored in the catalyst 26. In such a case, if the engine is restarted after being stopped for a long period, the exhaust air-fuel ratio is controlled to the stoichiometric air-fuel ratio or to the rich side by the warm up operation. At that time, there is the problem that because the NOx catalyst 26 is in an inactive state, that is, a state in which a NOx reducing ability is insufficient, the stored NOx desorbs from the catalyst 26 and is emitted without being treated, and thus the exhaust emissions deteriorate.

Therefore, according to the present embodiment, a configuration is adopted that, when it is predicted that a stopping time of the internal combustion engine is near based on travel information obtained from the navigation system 52, executes rich spike control and performs a reduction process of the NOx catalyst 26. A specific example of the method of predicting a stopping time is a method in which, first, while the vehicle is traveling, the ECU 50 compares the current position of the vehicle that is acquired by the navigation system 52 and the destination of the guidance operation being performed by the navigation system 52. In this case, the term "destination" refers to a destination that is selected as the location to travel to by the driver from among a plurality of destinations registered in the navigation system 52. There is a high possibility that the internal combustion engine will be stopped when the vehicle reaches the destination. Therefore, for example, when a distance or a time from the current position of the vehicle to the destination is less than or equal to a given level, that is, when the vehicle has arrived in the vicinity of the destination, the ECU 50 predicts that a stopping time of the internal combustion engine is near and therefore executes rich spike control.

As a result, because it is possible to execute rich spike control before stopping the internal combustion engine and, thereafter, stop the internal combustion engine, NOx components remaining in the catalyst 26 can be reduced and eliminated prior to stopping the internal combustion engine. Consequently, even if warming up is performed the next time the internal combustion engine is started, emission of NOx can be avoided. Therefore, according to the present embodiment, exhaust emissions when starting the internal combustion engine can be improved by utilizing information of the navigation system 52.

Further, the ECU 50 predicts whether or not the internal combustion engine will be stopped for a period that is long enough to require a warming up operation based on a past travel history acquired by the navigation system 52. When the ECU 50 predicts that the internal combustion engine will be stopped for a long time, the ECU 50 executes rich spike control before the internal combustion engine stops. More specifically, first, the ECU 50 acquires specific locations at which there is a high possibility that the vehicle will be parked for a long duration from the past travel history. These locations are locations at which the vehicle has been parked for a long duration in the past. Specific examples thereof include a car park at a place of employment or a car park near a railway station or the like. At such locations, there is a high possibility that the internal combustion engine will enter a cold state due to being stopped for a long duration, and that warming up with a rich air-fuel ratio will be performed at the next start-up. Therefore, for example, when a distance or a time to the specified location from the current position of the vehicle is less than or equal to a given level, that is, when the vehicle has approached a location at which there is a possibility that the vehicle will be parked for a long duration, the ECU 50 predicts that the internal combustion engine will be stopped for a long time and executes rich spike control before the vehicle arrives the location.

Thus, when the internal combustion engine will be stopped for a long duration, the ECU 50 can predict that the stopping duration will be long utilizing past travel history, and can stop the internal combustion engine after executing rich spike control. As a result, NOx components that remain in the catalyst 26 can be eliminated before stopping the internal combustion engine and emission of NOx caused by a warming up operation at start-up can be avoided. Further, even in a case in which a parking place of the vehicle is unrelated to a destination registered in the navigation system 52, rich spike control can be executed at an appropriate timing before stopping the internal combustion engine. Thus, the travel information of the navigation system 52 can be utilized more effectively, and precise control can be performed. Furthermore, since rich spike control need not be performed when the internal combustion engine will be stopped for a short time and a warming up operation will not be required, fuel can be saved.

In contrast, when the amount of NOx components remaining in the NOx catalyst 26 is small, it is not necessary to perform rich spike control before stopping the internal combustion engine. Therefore, for example, the ECU 50 estimates a NOx amount in the exhaust gas in accordance with the number of engine revolutions, the degree of throttle opening, the state of the air/fuel ratio or the like during operation of the internal combustion engine, and determines a NOx amount stored in the NOx catalyst 26 by integrating the estimated NOx amount. The ECU 50 then determines whether the stored amount of NOx is greater than or equal to a NOx reference determination value α. In this case, the NOx reference determination value α is a storage amount level at which a reduction process for NOx is required. The NOx reference determination value α is previously stored in the ECU 50. The ECU 50 executes rich spike control before stopping the internal combustion engine only when the NOx storage amount is greater than or equal to the NOx reference determination value α. It is thereby possible to avoid executing unnecessary rich spike control when the NOx storage amount is small.

The amount of NOx that desorbs from the NOx catalyst 26 due to warming up when starting the engine is also influenced by the temperature environment. More specifically, at a cold start up the degree to which the air-fuel ratio is enriched by warming up increases, and NOx stored in the catalyst 26 is liable to desorb by a corresponding amount. Therefore, for example, in winter or in cold districts or the like, it is preferable to suppress the residual amount of NOx components stored in the catalyst 26 after stopping the engine to a smaller amount.

Thus, according to the present embodiment, the temperature of the internal combustion engine at the next start-up is estimated based on the current position of the vehicle and the current date that are acquired by the navigation system 52 as well as the outside air temperature that is acquired by the outside air temperature sensor 42. Further, a configuration is adopted that adjusts the amount of NOx that will remain after stopping the engine in accordance with the estimated temperature. More specifically, first, the ECU 50 determines the climate and season or the like of the current location based on the current position of the vehicle and the date, and determines the outside temperature or the degree of coldness around the vehicle based on the outside air temperature. Next, the ECU 50 estimates the temperature at the next engine start-up in accordance with the determined results. The ECU 50 performs control to decrease the residual amount of NOx components stored in the catalyst 26 in accordance with the extent to which there is a decrease in the estimated temperature at the next engine start-up.

Examples of a method that decreases a residual amount of NOx components include a method that (1) extends an execution duration of rich spike control or increases the execution frequency, and a method that (2) executes rich spike control even when a NOx residual amount is a small amount by making a permissible limit (an upper limit determination value α that is described later) of a NOx residual amount a low value. In this connection, according to the above described control a configuration is adopted that uses information regarding the current position of the vehicle, the current date, and the outside air temperature when estimating the engine temperature at the next engine start-up. However, the present invention is not limited thereto, and a configuration may be adopted that estimates the engine temperature at the next engine start-up using at least one of these three parameters.

According to the above described control, the engine temperature at the next engine start-up can be estimated according to the temperature environment around the vehicle, and a residual amount of NOx after stopping the internal combustion engine can be appropriately adjusted in advance in accordance with the estimated temperature. It is therefore possible to prevent, for example, emission of NOx that is in a stored state even if warming up is performed in an extremely rich atmosphere in winter or in a cold district or the like. Further, in summer or in a warm district or the like, wasteful rich spike control need not be executed before stopping the engine, and the execution timing thereof can be accurately set.

### [Specific processing for implementing Embodiment 1]

Figure 2 is a flowchart of control executed by the ECU according to Embodiment 1 of the present invention. The routine illustrated in Figure 2 is repeatedly executed during operation of the vehicle. According to the routine illustrated in Figure 2, first the ECU reads in travel information from the navigation system 52 (step 100). Further, as described above, the ECU estimates a NOx storage amount of the catalyst 26 and reads in the estimated value (step 102).

Next, the ECU determines whether or not the current position of the vehicle is near the destination, including the home of the driver, based on the acquired travel information (step 104). If the result determined in step 104 is "Yes", the ECU estimates that a stopping time of the internal combustion engine is near as described above, and hence the ECU sets the NOx reference determination value α to a small value α1 in order to execute rich spike control (step 106). In contrast, if the result determined in step 104 is "No", the ECU reads in past travel history from the navigation system 52 (step 108). The ECU then determines whether or not the vehicle is in the vicinity of a location at which it is predicted the vehicle will be parked for a long duration based on the travel history (step 110). If the result determined in step 110 is "Yes", the ECU sets the NOx reference determination value α to a small value α1 in the aforementioned step 106. In contrast, if the result determined in step 110 is "No", since a stopping time of the internal combustion engine is not near, the ECU sets the NOx reference determination value α to a value α2 that is greater than the small value α1 (α2 > α1) in order to perform rich spike control according to the normal criterion (step 112).

Next, in step 114, the ECU determines whether or not the NOx storage amount is greater than or equal to the upper limit determination value α. If the result determined in step 114 is "Yes", it indicates that the NOx storage amount has reached a level at which a reduction process should be performed. Therefore, first, the ECU 50 estimates the engine temperature at the next engine start-up as described above, and sets a target value for a NOx residual amount according to the estimated temperature (step 116). Next, the ECU sets an execution time period and execution frequency and the like of rich spike control according to the NOx residual amount target value, and executes rich spike control based on this setting (step 118). Thus, according to the present embodiment, it is possible to reliably suppress the amount of NOx stored in the catalyst 26 after stopping the internal combustion engine utilizing the navigation system 52.

### Embodiment 2

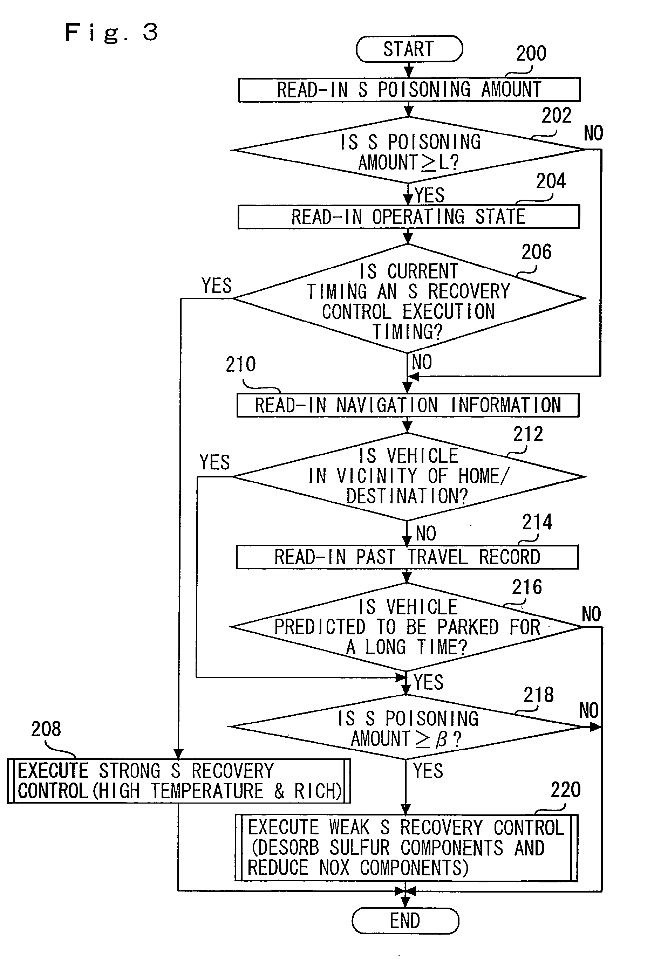

Next, Embodiment 2 of the present invention is described referring to (Figure 3. The present embodiment adopts almost the same system configuration as in the above described Embodiment 1 (Figure 1). However, the present embodiment differs from Embodiment 1 in the respect that the present embodiment deals with sulfur poisoning of the NOx catalyst. According to the present embodiment, components that are the same as in Embodiment 1 are denoted by the same reference numerals, and a description thereof is omitted below.

### [Features of Embodiment 2]

It is known that a NOx catalyst is subjected to sulfur poisoning by adherence of sulfur components included in fuel. According to the conventional art, an internal combustion engine may be stopped in a state in which relatively large amounts of sulfur components are adhered to the catalyst 26. In such a state, when warming up is performed at the next start-up, for example, a sulfur component that is adhered to a site from which the sulfur component is liable to be desorbed, such as alumina or a precious metal inside the catalyst, the sulfur component will be desorbed from the catalyst at even a comparatively low temperature. There is thus the problem that the desorbed sulfur component reacts with hydrogen present in the exhaust gas in a stoichiometric or rich atmosphere and generates harmful hydrogen sulfide (H2S).

Therefore, according to the present embodiment, when it is predicted that a stopping time of the internal combustion engine is near based on travel information obtained from the navigation system 52, rich spike control is executed to desorb sulfur components inside the NOx catalyst 26. A method that is approximately the same as a method described in Embodiment 1 is used to predict a stopping time. Further, according to the present embodiment, in approximately the same manner as in Embodiment 1, the ECU predicts whether the internal combustion engine will be stopped for a duration that is long enough to require a warming up operation based on past travel history acquired by the navigation system 52. When the ECU predicts that the internal combustion engine will be stopped for a long duration, the ECU executes rich spike control before stopping to thereby cause the sulfur component inside the NOx catalyst 26 to be desorbed.

According to the present embodiment, the amount of sulfur components adhered to the NOx catalyst 26 is estimated based on control parameters of the internal combustion engine and the like, and the ECU executes rich spike control before the internal combustion engine stops only in a case where the adhered amount of sulfur components is greater than or equal to a sulfur reference determination value β. In this case, the sulfur reference determination value β is an adherence amount level at which it is necessary to perform a desorption process for the sulfur components. The sulfur reference determination value β is previously stored in the ECU 50.

According to the above described control, approximately the same operational advantages as in Embodiment 1 can be obtained with respect to sulfur components that are adhered to the NOx catalyst 26. More specifically, a sulfur component that is adhered to the NOx catalyst 26 can be desorbed before the engine stops, and emission of hydrogen sulfide by a warming up operation when starting the engine can be avoided. Further, even in a case in which a parking place of the vehicle is unrelated to a destination registered in the navigation system 52, when the vehicle is to be parked for a long time period, a sulfur component can be desorbed at an appropriate timing before stopping the internal combustion engine. Further, when an adhered amount of sulfur components is small, unnecessary execution of rich spike control can be avoided.

### [Specific processing for implementing Embodiment 2]

Figure 3 is a flowchart of control executed by the ECU according to Embodiment 2 of the present invention. The routine illustrated in Figure 3 is repeatedly executed during operation of the vehicle. According to the routine illustrated in Figure 3, first, as described above, the ECU estimates an S poisoning amount that is an amount of a sulfur component adhered to the NOx catalyst 26 based on control parameters of the internal combustion engine and the like (step 200). Next, the ECU determines whether or not the S poisoning amount is equal to or greater than an upper limit determination value L (step 202). The term "upper limit determination value L" refers to an excessive adherence amount level at which it is necessary to immediately perform a desorption process for sulfur components. The upper limit determination value L is set to a larger value than the sulfur reference determination value β. If the result determined in step 202 is "No", the processing moves to step 210 that is described later.

In contrast, if the result determined in step 202 is "Yes", the ECU reads in the operational state of the internal combustion engine (step 204), and determines whether or not the current timing is a sulfur component desorption process (S recovery control) execution timing (step 206). The term "S recovery control execution timing" refers to a timing (operational state) at which it is possible to increase the exhaust gas temperature and enrich the exhaust air-fuel ratio. When the result determined in step 206 is "Yes", the ECU raises the exhaust gas temperature and enriches the exhaust air-fuel ratio to thereby execute strong S recovery control (step 208).

In some cases a sulfur component in fuel, for example, forms a sulfate such as BaS04 and is firmly adhered inside the NOx catalyst 26. Desorption of this kind of sulfur component is difficult in comparison to desorption of a sulfur component that is adhered to a site from which the sulfur component is easily desorbed such as, for example, alumina or a precious metal. In such a case, strong S recovery control can desorb the firmly adhered sulfur component by realizing a rich air-fuel ratio under a high temperature.

In contrast, when the result determined in step 206 is "No", similarly to Embodiment 1, the ECU reads in travel information from the navigation system 52 (step 210), and determines whether or not the current position of the vehicle is in the vicinity of the destination, including the home of the driver (step 212). When the result determined in step 212 is "Yes", it is predicted that a stopping time of the internal combustion engine is near, and therefore the processing shifts to step 218 that is described later. In contrast, if the result determined in step 212 is "No", the ECU reads in the past travel history from the navigation system 52 (step 214). Next, the ECU determines whether or not the vehicle is in the vicinity of a location at which it is predicted the vehicle will be parked for a long duration based on the travel history (step 216). If the result determined in step 216 is "Yes", the processing moves to step 218. In contrast, if the result determined in step 216 is "No", the processing ends.

More specifically, the determination made in step 218 is performed when the current position of the vehicle is in the vicinity of the destination or is in the vicinity of a place at which it is predicted that the vehicle will be parked for a long duration. In step 218, the ECU determines whether or not the S poisoning amount is equal to or greater than the aforementioned sulfur reference determination value β. When the result determined in step 218 is "Yes", the ECU executes rich spike control that is weak S recovery control (step 220).

In this case, weak S recovery control (rich spike control) is control that holds the exhaust air-fuel ratio at the stoichiometric ratio or on the rich side thereof, and performs a desorption process for sulfur components adhered to sites from which the sulfur components are easily desorbed within the NOx catalyst 26. A sulfur component adhered to such a site will be desorbed relatively easily by a warming up operation the next time the engine starts, and will be emitted as hydrogen sulfide. By executing the weak S recovery control, a desorption process for sulfur components that are liable to change into hydrogen sulfide the next time the engine starts can be completed before the engine stops.

The rich spike control when reducing NOx, for example, generates a rich spike of one to two seconds per minute as is generally known. In contrast, the rich spike control when desorbing sulfur is generally executed over a longer time period (for example, approximately five to ten minutes) than a time period required when reducing NOx. More specifically, according to the present embodiment, a desorption process for sulfur components and a reduction process for NOx components can be efficiently performed together by rich spike control in step 220 using only the necessary minimum amount of fuel.

### Embodiment 3

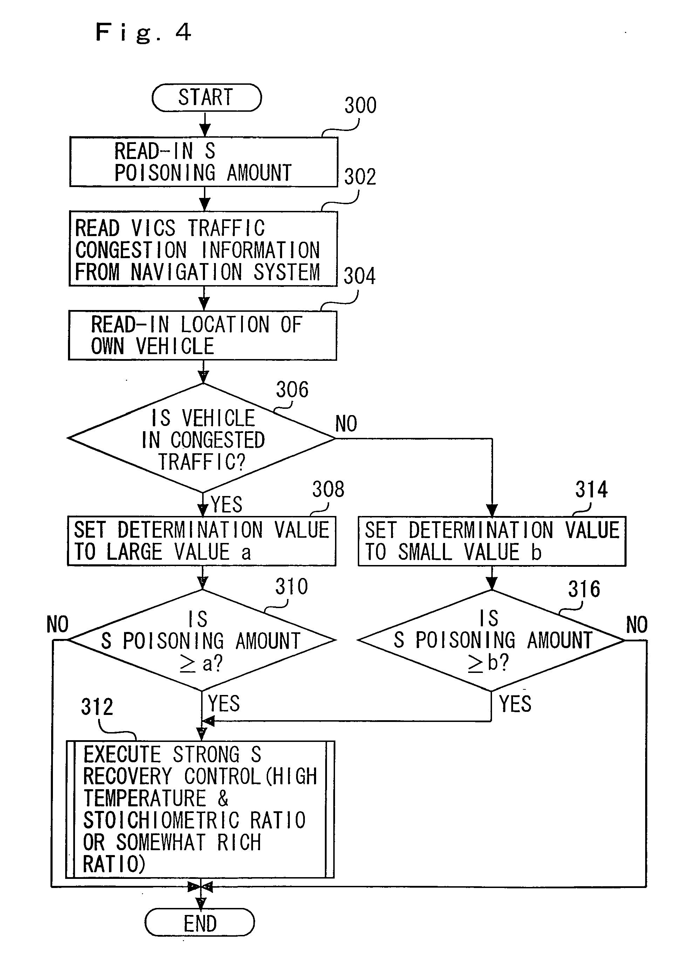

Next, Embodiment 3 of the present invention is described referring to Figure 4. The present embodiment adopts almost the same system configuration as in the above described Embodiments 1 and 2 (Figure 1). However, the present embodiment differs from Embodiment 1 in the respect that the present embodiment is configured to use road traffic information to perform control, in addition to the control contents of Embodiment 1 or 2. According to the present embodiment, components that are the same as in the above described Embodiment 1 are denoted by the same reference numerals, and a description thereof is omitted below.

### [Features of Embodiment 3]

Sulfur components that are adhered inside the NOx catalyst 26 change to SOx or the like when a desorption process is performed, and are emitted to outside. Consequently, it is preferable that a desorption process be executed as much as possible in a location in which the desorption process does not have an impact on the surrounding environment. Therefore, according to the present embodiment a configuration is adopted that adjusts a desorption process execution state based on road traffic information (VICS traffic congestion information) that is obtained as travel information from the navigation system 52. The term VICS (Vehicle Information and Communication System) refers to a commonly known system that sends road traffic information relating to traffic congestion and traffic regulations and the like that is compiled by a specific organization (VICS center) to the navigation system 52 or the like of vehicles in real time.

More specifically, when the ECU 50 determines based on VICS information that the vehicle in question is traveling in congested traffic, the ECU increases the permissible limit (reference determination value) for a sulfur adherence amount (S poisoning amount) inside the catalyst to a limit that is greater than the limit at the time of normal travel, to thereby reduce the likelihood of executing a desorption process. According to this control, it is possible to take the environment surrounding the vehicle into consideration and prevent SOx or the like being emitted by execution of a desorption process irrespective of the fact that the vehicle is traveling in congested traffic in which there is a high concentration of other vehicles and people around the vehicle.

### [Specific processing for implementing Embodiment 3]

Figure 4 is a flowchart of control executed by the ECU according to Embodiment 3 of the present invention. The routine illustrated in Figure 4 is executed concurrently with at least one of the control described in Embodiment 1 and the control described in Embodiment 2 above (Figure 2 and Figure 3). According to the routine shown in Figure 4, first, the ECU 50 estimates the S poisoning amount of the NOx catalyst 26 by the same processing as in step 200 of Embodiment 2 described above (step 300). The ECU 50 also reads in VICS traffic congestion information and the current position of the vehicle from the navigation system 52 (steps 302 and 304).

Next, the ECU 50 determines whether or not the traffic on the road the vehicle is currently traveling on is congested based on the VICS traffic congestion information (step 306). When the result determined in step 306 is "Yes", the ECU 50 sets the reference determination value to a large value a for travel in congested traffic (step 308), and subsequently determines whether or not the S poisoning amount is greater than or equal to the reference determination value a (step 310). The reference determination value a for travel in congested traffic is a level of an excessive adherence amount at which it is necessary to immediately perform a desorption process for sulfur components even when traveling in congested traffic. The reference determination value a is previously stored in the ECU 50. When the result determined in step 310 is "Yes", the ECU 50 executes S recovery control (rich spike control) (step 312).

In contrast, when the result determined in step 306 is "No", since the vehicle is not traveling in congested traffic the ECU 50 sets the reference determination value to a small value b for travel in normal traffic (for travel in non-congested traffic) (step 314), and determines whether or not the S poisoning amount is greater than or equal to the reference determination value b (step 316). The reference determination value b for travel in normal traffic is a level of an adherence amount at which a desorption process for a sulfur component should be performed in a state in which the vehicle is traveling in traffic that is not congested. The reference determination value b for travel in normal traffic is set to a smaller value than the reference determination value a for travel in congested traffic (a > b). When the result determined in step 316 is "Yes", the ECU 50 executes S recovery control at the aforementioned step 312. In contrast, when the result determined in step 316 is "No", the ECU 50 ends the processing without executing S recovery control. Thus, according to the present embodiment, the likelihood of executing S recovery control when traveling in congested traffic can be reduced.

### Embodiment 4

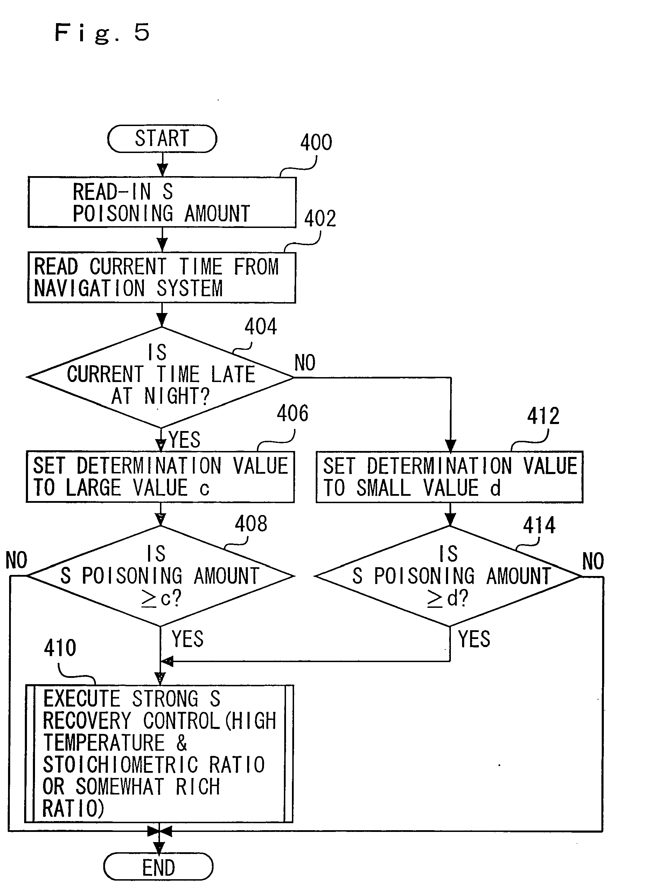

Next, Embodiment 4 of the present invention is described referring to Figure 5. The present embodiment adopts almost the same system configuration as in the above described Embodiments 1 and 2 (Figure 1). However, the present embodiment differs from Embodiment 1 in the respect that the present embodiment is configured to use a time of travel as a condition to perform control, in addition to the control contents of Embodiment 1 or 2. According to the present embodiment, components that are the same as in the above described Embodiment 1 are denoted by the same reference numerals, and a description thereof is omitted below.

### [Features of Embodiment 4]

As described in the foregoing Embodiment 3, it is preferable that a sulfur component desorption process be executed as much as possible in a location in which the desorption process does not have an impact on the surrounding environment. Therefore, according to the present embodiment a configuration is adopted that adjusts the execution state of a desorption process based on a time of travel that is obtained as travel information from the navigation system 52. More specifically, when the ECU 50 determines that the time of travel is at nighttime (late night), the ECU 50 sets the permissible limit (reference determination value) of the S poisoning amount lower than at a time of normal travel so that a desorption process is more likely to be executed at nighttime. According to this control, a desorption process can be actively performed while traveling at nighttime when there are few vehicles and people around the vehicle. Thus, the desorption process efficiency can be enhanced while taking the surrounding environment into consideration.

### [Specific processing for implementing Embodiment 4]

Figure 5 is a flowchart of control executed by the ECU according to Embodiment 4 of the present invention. The routine illustrated in Figure 5 is executed concurrently with at least one of the control described in Embodiment 1 and the control described in Embodiment 2 above (Figure 2 and Figure 3). According to the routine shown in Figure 5, first, the ECU 50 estimates the S poisoning amount of the NOx catalyst 26 similarly to the above described Embodiment 3 (step 400). The ECU 50 also reads in the current time from the navigation system 52 (step 402).

Next, the ECU 50 determines whether or not the current time is late at night (step 404). When the result determined in step 404 is "Yes", the ECU 50 sets the reference determination value to a small value c for nighttime travel (step 406), and determines whether or not the S poisoning amount is greater than or equal to the reference determination value c (step 408). The reference determination value c for nighttime travel is set to a relatively small value in order to actively perform a desorption process for sulfur components during nighttime travel when it is not a problem if a desorption process is performed. When the result determined in step 408 is "Yes", the ECU 50 executes S recovery control similarly to Embodiment 3 (step 410).

In contrast, when the result determined in step 408 is "No", since the vehicle is not traveling at nighttime, the ECU 50 sets the reference determination value to a large value d for normal travel (for travel during the daytime) (step 412), and determines whether or not the S poisoning amount is greater than or equal to the reference determination value d (step 414). Here, the reference determination value d for normal travel is a level of an adherence amount at which a desorption process for sulfur components should be performed when the vehicle is traveling during daytime, and is set to a larger value than the reference determination value c for nighttime travel (d > c). When the result determined in step 414 is "Yes", the ECU 50 executes S recovery control in the aforementioned step 410. In contrast, when the result determined in step 414 is "No", the ECU 50 ends the processing without executing the S recovery control. Thus, according to the present embodiment, it can be made easier to execute S recovery control while traveling at nighttime.

In the foregoing embodiments, steps 100 to 118 in Figure 2, steps 200 to 220 in Figure 3, steps 300 to 312 in Figure 4, and steps 400 to 410 in Figure 5 illustrate specific examples of catalyst regeneration control means. Further, step 102 in Figure 2 illustrates a specific example of NOx storage amount acquiring means, and steps 200, 300, and 400 in Figure 3 to Figure 5 illustrate a specific example of sulfur adherence amount acquiring means.

Further, according to Embodiment 1 a configuration is adopted that performs control that focuses on a NOx storage amount, and according to Embodiment 2 a configuration is adopted that performs control that focuses on a sulfur poisoning amount. In this respect, according to the present invention a configuration may also be adopted that combines Embodiment 1 and Embodiment 2 and implements these embodiments together. Likewise, according to the present invention a configuration may be adopted that combines Embodiment 3 and Embodiment 4 and implements these embodiments together.

Furthermore, according to Embodiments 1 and 2, a configuration is adopted that identifies a location at which the vehicle will be parked for a long duration based on past travel history. However, the present invention is not limited thereto and, for example, a configuration may be adopted that acquires information regarding a time zone in which parking of the vehicle for a long duration is liable to be performed as travel information from the navigation system 52, and performs rich spike control when the current time approaches the aforementioned time zone.

## Claims

1. An exhaust emission purifier of an internal combustion engine, comprising:
a NOx catalyst that is provided in an exhaust passage of an internal combustion engine that is mounted in a vehicle, and that stores and reduces NOx components in exhaust gas;
information acquiring means that acquires information including a current position and a travel history of the vehicle as travel information; and
catalyst regeneration control means that, when it is predicted that a stopping time of the internal combustion engine is near based on the travel information, makes an exhaust air-fuel ratio of the internal combustion engine richer than at a time of normal operation.

2. The exhaust emission purifier of an internal combustion engine according to claim 1, wherein the catalyst regeneration control means predicts whether or not a stopping time of the internal combustion engine is near by comparing a current position of the vehicle that is obtained as the travel information and a destination that is registered in the information acquiring means.

3. The exhaust emission purifier of an internal combustion engine according to claim 1 or 2, wherein the catalyst regeneration control means predicts whether or not the internal combustion engine will be stopped for a period that is long enough to require a warming up operation based on the travel history of the vehicle that is obtained as the travel information, and when the catalyst regeneration control means predicts that the stop time will be long, the catalyst regeneration control means enriches the exhaust air-fuel ratio prior to stopping.

4. The exhaust emission purifier of an internal combustion engine according to any one of claims 1 to 3, further comprising:
NOx storage amount acquiring means that acquires an amount of NOx components stored in the NOx catalyst;
wherein when a storage amount of the NOx components is greater than or equal to a NOx reference determination value, the catalyst regeneration control means enriches the exhaust air-fuel ratio in order to perform a reduction process for the NOx components.

5. The exhaust emission purifier of an internal combustion engine according to any one of claims 1 to 4, further comprising:
sulfur adherence amount acquiring means that acquires an amount of sulfur components adhered to the NOx catalyst;
wherein when an adherence amount of the sulfur components is greater than or equal to a sulfur reference determination value, the catalyst regeneration control means enriches the exhaust air-fuel ratio in order to perform a desorption process for the sulfur components.

6. The exhaust emission purifier of an internal combustion engine according to claim 5, wherein when performing the desorption process for the sulfur components, the catalyst regeneration control means enriches the exhaust air-fuel ratio over a longer time period than a time period required for a reduction process for NOx components stored in the NOx catalyst.

7. The exhaust emission purifier of an internal combustion engine according to claim 5 or 6, wherein the catalyst regeneration control means adjusts an execution state of the desorption process based on road traffic information or a time of travel that are obtained as the travel information.

8. The exhaust emission purifier of an internal combustion engine according to any one of claims 1 to 7, wherein the catalyst regeneration control means estimates a temperature of the internal combustion engine at a time of a next start-up based on at least one item of information among items of information relating to a current position of the vehicle and a current date that are obtained as the travel information and an outside air temperature, and previously adjusts an amount of NOx components that remain in the NOx catalyst when the internal combustion engine stops in accordance with the estimated temperature.
